# EUROPEAN PATENT APPLICATION

(11) **EP 4 799 861 A1**
(43) Date of publication of application: **02.09.2026**
(21) Application number: 26159364.4
(22) Date of filing: 18.02.2026
(51) Int. Cl.: B60P 1/40, B65G 67/04, A01D 90/10

(54) **AUTONOMOUS AGRICULTURAL SYSTEM INCLUDING A CART MANAGEMENT SYSTEM FOR MONITORING AND MANAGING AN UNLOADING OPERATION AND DETERMINING FILL LEVELS OF A TRAILER OF A TRANSPORT VEHICLE AND RELATED METHODS**

(30) Priority: 27.02.2025 US 202563764490 P
(71) Applicant: AGCO International GmbH, 8212 Neuhausen am Rheinfall (CH); PTx Trimble LLC, Westminster, CO 80021 (US)
(72) Inventor: CHRISTIANSEN, Martin Peter, 8930 Randers (DK); MUJKIC, Esma, 8930 Randers (DK); Steen, Kim Arild, 8930 Randers (DK); Beck, Nicolai, 8930 Randers (DK); Toustrup, Viktor Johns, 8930 Randers (DK); Murman, Josh, Rising City, 68658 (US)
(74) Representative: AGCO Intellectual Property Department

(57) **Abstract**

A cart management system includes an array of sensors mounted on at least one an agricultural vehicle or a cart and is configured to capture first 3D data of an interior of a trailer of a transport vehicle in an empty state, based on the first 3D data, generate a three-dimensional (3D) map of the trailer, detect a commencement of an unloading operation by an auger of the cart into the trailer; responsive to detecting the commencement of the unloading operation, capture second 3D data of the interior of the trailer and a commodity being unloaded into the trailer, capture image data of the interior of the trailer and the commodity being unloaded into the trailer, and based at least partially on the 3D map of the trailer, the second 3D data, and the image data, determine a fill level of the trailer.

## Description

### CROSS-REFERENCE TO RELATED APPLICATIONS

**N/A**

### BACKGROUND

In modern agriculture, the efficiency and precision of grain handling and transport are critical for optimizing productivity and reducing operational costs. Traditional methods of loading and unloading grain involve significant manual intervention and are prone to inefficiencies and errors. These methods often rely on visual estimation and manual control, which can lead to uneven filling, spillage, and underutilization of transport vehicle capacity. As agricultural operations scale up, the need for automated systems that can manage these tasks with minimal human intervention becomes increasingly important.

The advent of autonomous agricultural systems has changed various aspects of farming, including planting, harvesting, and crop monitoring. However, the integration of autonomous systems into grain handling and transport operations remains a challenging area that requires further innovation.

One of the key challenges in automating grain handling is the accurate monitoring and control of the unloading process. This involves ensuring that the grain is evenly distributed within the trailer of a transport vehicle, preventing overfilling or underfilling, and optimizing the use of available space. Traditional methods of monitoring the fill level of a trailer during unloading are often inadequate, as the methods do not provide real-time, precise data on the distribution of the grain within the trailer.

### BRIEF SUMMARY

Some embodiments include an autonomous agricultural system comprising: an agricultural vehicle; a cart operably coupled to the agricultural vehicle; and a cart management system for monitoring and controlling operation of the cart and comprising: an array of sensors mounted on at least one the agricultural vehicle or the cart; at least one processor; and at least one non-transitory computer-readable storage medium storing instructions thereon that, when executed by the at least one processor, cause the cart management system to: capture, via the array of sensors and in real-time, first 3D data of at least an interior of a trailer of a transport vehicle; based on the first 3D data, generate a three-dimensional (3D) map of the trailer in an empty state; detect a commencement of an unloading operation by an auger of an unloading system of the cart into the trailer of the transport vehicle; responsive to detecting the commencement of the unloading operation, capture, via the array of sensors and in real-time, second 3D data of the interior of the trailer and a commodity being unloaded into the trailer of the transport vehicle; responsive to detecting the commencement of the unloading operation, capture, via the array of sensors and in real-time, image data of the interior of the trailer and the commodity being unloaded into the trailer of the transport vehicle; and based at least partially on the 3D map of the trailer, the second 3D data, and the image data, determine a fill level of the trailer of the transport vehicle.

The cart management system may further include instructions thereon that, when executed by the at least one processor, cause the cart management system to analyze the image data to identify and classify at least the trailer, the auger, and the commodity within the image data.

Analyzing the image data to identify and classify at least the trailer, the auger, and the commodity within the image data may include analyzing the image data via one or more machine learning algorithms.

Analyzing the image data to identify and classify at least the trailer, the auger, and the commodity within the image data may include utilizing a single shot detector algorithm to identify the trailer, the auger, and the commodity.

Detecting the commencement of the unloading operation may include detecting the commodity leaving a downspout of the auger.

The cart management system may further include instructions thereon that, when executed by the at least one processor, cause the cart management system to: fuse the second 3D data and the image data to generate enhanced fused data; and determine the fill level of the trailer of the transport vehicle based at least partially on the enhanced fused data.

The cart management system further may include instructions thereon that, when executed by the at least one processor, cause the cart management system to: responsive to determining that the fill level is at or proximate a maximum fill level of a compartment of the trailer, cause the autonomous agricultural system to move relative to the transport vehicle or terminate the unloading operation.

Causing the autonomous agricultural system to move relative to the transport vehicle may include causing the autonomous agricultural system to move forward or backward such the auger is aligned with a different compartment or portion of the trailer of the transport vehicle.

The maximum fill level of the compartment of the trailer may include a predetermined volume percentage of an overall volume capacity of the trailer.

Determining the fill level of the trailer of the transport vehicle may include comparing the second 3D data with the 3D map of the trailer.

Comparing the second 3D data with the 3D map of the trailer may include comparing a height of the commodity determined from the second 3D data and the image data to dimensions of the trailer determined via generation of the 3D map of the trailer in an empty state.

The cart management system may further include instructions thereon that, when executed by the at least one processor, cause the cart management system to: provide an indication of the determined fill level of the trailer of the transport vehicle during the unloading operation.

Providing the indication of the determined fill level of the trailer of the transport vehicle during the unloading operation may include causing a visual depiction of the fill level to be displayed on remote device.

The first 3D data may include first LIDAR data, and the second 3D data may include second LIDAR data.

Some embodiments a method of monitoring and controlling operation of a cart of an autonomous agricultural system, the cart being operably coupled to an agricultural vehicle of the autonomous agricultural system, the method comprising: capturing, via an array of sensors mounted on one or more of the cart or the agricultural vehicle and in real-time, first 3D data of an interior of a trailer of a transport vehicle; based on the first 3D data, generating a three-dimensional (3D) map of the trailer in an empty state; detecting a commencement of an unloading operation by an auger of an unloading system of the cart into the trailer of the transport vehicle; responsive to detecting the commencement of the unloading operation, capturing, via the array of sensors and in real-time, second 3D data of the interior of the trailer and a commodity being unloaded into the trailer of the transport vehicle; responsive to detecting the commencement of the unloading operation, capturing, via the array of sensors and in real-time, image data of the interior of the trailer and a commodity being unloaded into the trailer of the transport vehicle; and based at least partially on the 3D map of the trailer, the second 3D data, and the image data, determining a fill level of the trailer of the transport vehicle.

Detecting the commencement of the unloading operation may include detecting the commodity leaving a downspout of the auger.

The method may further include fusing the second 3D data and the image data to generate enhanced fused data and determining the fill level of the trailer of the transport vehicle based at least partially on the enhanced fused data.

The method may further include responsive to determining that the fill level is at or proximate a maximum fill level of a compartment of the trailer, causing the autonomous agricultural system to move relative to the transport vehicle or terminate the unloading operation.

Causing the autonomous agricultural system to move relative to the transport vehicle may include causing the autonomous agricultural system to move forward or backward such the auger is aligned with a different compartment or portion of the trailer of the transport vehicle.

One or more embodiments include a cart management system for monitoring and controlling operation of a cart of an autonomous agricultural system, the cart being operably coupled to an agricultural vehicle of the autonomous agricultural system, the cart management system comprising: an array of sensors mounted on at least one the agricultural vehicle or the cart; at least one processor; and at least one non-transitory computer-readable storage medium storing instructions thereon that, when executed by the at least one processor, cause the cart management system to: capture, via the array of sensors and in real-time, first 3D data of at least an interior of a trailer of a transport vehicle in an empty state; based on the first 3D data, generate a three-dimensional (3D) map of the trailer; detect a commencement of an unloading operation by an auger of an unloading system of the cart into the trailer of the transport vehicle; responsive to detecting the commencement of the unloading operation, capture, via the array of sensors and in real-time, second 3D data of the interior of the trailer and a commodity being unloaded into the trailer of the transport vehicle; responsive to detecting the commencement of the unloading operation, capture, via the array of sensors and in real-time, image data of the interior of the trailer and the commodity being unloaded into the trailer of the transport vehicle; and based at least partially on the 3D map of the trailer, the second 3D data, and the image data, determine a fill level of the trailer of the transport vehicle.

Other technical features may be readily apparent to one skilled in the art from the following figures, descriptions, and claims.

Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a schematic top view of an autonomous agricultural system and a transport vehicle according to one or more embodiments of the disclosure;
FIG. 2 shows a perspective view of an autonomous agricultural system according to one or more embodiments of the disclosure;
FIG. 3 shows a top view of an autonomous agricultural system according to one or more embodiments of the disclosure;
FIG. 4 shows a side view of a cart and an auger of an auger system of the cart according to one or more embodiments of the disclosure;
FIG. 5 shows a schematic view of a cart management system according to one or more embodiments of the present disclosure;
FIG. 6 shows a flowchart of a method of monitoring and controlling operation of a cart and/or agricultural vehicle according to one or more embodiments; and
FIG. 7A and FIG. 7B show perspective views of an auger of an unloading system of a cart during an unloading process;
FIG. 8A through FIG. 8C show top view of an autonomous agricultural system at different stages of unloading a commodity into a trailer of a transport vehicle; and
FIG. 9 is a schematic view of a central controller according to embodiments of the disclosure.

### DETAILED DESCRIPTION

Illustrations presented herein are not meant to be actual views of any particular agricultural vehicle, grain cart, sensors, cart management system, component, or system, but are merely idealized representations that are employed to describe embodiments of the disclosure. Additionally, elements common between figures may retain the same numerical designation for convenience and clarity.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," "front," "rear," "lateral," etc., is used for clarity and convenience in understanding the disclosure and accompanying drawings, and does not connote or depend on any specific preference or order, except where the context clearly indicates otherwise. For example, these terms may refer to an orientation of elements of an agricultural vehicle, a combine harvester, a cart, a transport vehicle, and/or an autonomous agricultural system as illustrated in the drawings. Additionally, these terms may refer to an orientation of elements of an agricultural vehicle, a combine harvester, a cart, and/or a transport vehicle when utilized in a conventional manners.

As used herein, the term "proximate," when utilized to describe positions of agricultural vehicle and/or the cart to another object (e.g., transport vehicle) means that the agricultural vehicle and/or the cart and the other object are within a given distance from each other. The distance may be at least partially dependent on a size (e.g., a lateral width in a horizontal direction orthogonal to a path of travel) of the agricultural vehicle and/or the cart. For example, the agricultural vehicle or the cart may be proximate the other object when the agricultural vehicle is within 20m, 10m, 5m, 2m, or 1m of the other object. In some embodiments, the distance may be a percentage (e.g., 25%) of the overall lateral width of the agricultural vehicle and/or cart. Additionally, in one or more embodiments, the distance may be based on an unloading system of the cart. For instance, the distance may include an appropriate distance between the cart and a transport vehicle for unloading process (e.g., unloading grain from the cart to the transport vehicle).

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

As used herein, the term "representation" may refer to a digital encoding of a physical object or phenomenon as captured by one or more sensors. The digital encoding may take various forms depending on the type of sensor data. As non-limiting examples 1) in image data, a representation may include pixels that represent visual characteristics of the object, 2) in video data, in addition to the representations of image data, a representation may include a sequence of images (frames) that capture the object's appearance and movement over time, 3) in light detection and ranging (LIDAR) data, a representation may include a three-dimensional (3D) point cloud where each point represents a precise location on the object's surface, 4) in radio detection and ranging (RADAR) data, a representation may include a two-dimensional (2D) map or 3D map showing the object's location and movement based on radio wave reflections, 5) in thermal data, as representation may include a thermal image where different colors represent the object's temperature variations, and 6) in sound data, a representation may include a digital signal representing sound waves produced by or reflected from the object. Put another way, a representation, as used herein, includes a structured form of data that allows for the analysis, interpretation, and understanding of the physical object or phenomenon captured by the sensors.

As used herein, the term "real-time" may refer to immediate or near-instantaneous collection (e.g., capturing) and processing of data (e.g., sensor data) as events occur. As a result, sensor data is captured and made available for analysis or decision-making without significant delay, allowing for timely responses and actions based on most current information.

As used herein the term "position" may refer to specific location of an object in a given space, typically defined by coordinates (e.g., x, y, z) in a coordinate system. For example, a position of a cart in a field might be given by its latitude, longitude, and altitude.

As used herein the term "orientation" may refer to an object's alignment relative to a reference frame. For example, the term "orientation" refers to how an object is aligned and rotated in space. For example, the term "orientation" refers to rotational coordinates (e.g., pitch, roll, yaw).

As used herein, an "aligned position" may refer to a position and an orientation of a cart relative to a position and an orientation of a transport vehicle that aligns an auger of the cart, itself, for unloading a commodity into a trailer of the transport vehicle. Put another way, the aligned position may represent a location and orientation of the cart relative to the transport vehicle that positions and orients the cart such that an unloading system (e.g., the auger) of the cart can effectively and appropriately unload a commodity into the trailer of the transport vehicle. In some embodiments, the aligned position may represent an optimized position and orientation of the cart relative to a position and an orientation of a transport vehicle. For instance, the aligned position may represent a position and an orientation of the cart relative to the transport vehicle that positions and orients the cart and the auger of the cart such that an unloading system can correctly and precisely unload the commodity into the trailer of the transport vehicle. Furthermore, the aligned position may represent a position and an orientation of the cart relative to the transport vehicle that positions and orients a downspout of the auger at least substantially centered (e.g., horizontally, laterally centered) over the trailer of the transport vehicle. In other words, the aligned position may result in the downspout of the auger being at least substantially centered between lateral sidewalls of the trailer of the transport vehicle. This positioning ensures that the commodity is evenly distributed and minimizes the risk of spillage. Centering the downspout of the auger allows for a more controlled and efficient unloading process, ensuring that the commodity flows directly into the trailer without accumulating on one side. In some embodiments, the aligned position is further determined (e.g., calculated) based on received or determined position and orientation of the transport vehicle (e.g., a GNSS position of the transport vehicle).

As used herein, the terms "Global Navigation Satellite System data" or "GNSS data" refer to data including a geographical location and a velocity of an object (e.g., agricultural vehicle) at a given time. The GNSS data may be determined by processing signals received from multiple satellites within global navigation satellite constellations such as Global Positioning System (GPS), GLONASS, Galileo, and BeiDou. In particular, a GNSS receiver may continuously acquire and track satellite signals, calculate time delays between a signal transmission and reception to compute pseudoranges, and use these pseudoranges to determine a position of the GNSS receiver through trilateration.

As used herein, the terms "Inertial Measurement Unit data" or "IMU data" refer to data including one or more of a specific force, an attitude, a velocity, an acceleration, an angular velocity, and/or an orientation of a moving object (e.g., agricultural vehicle) at a given time.

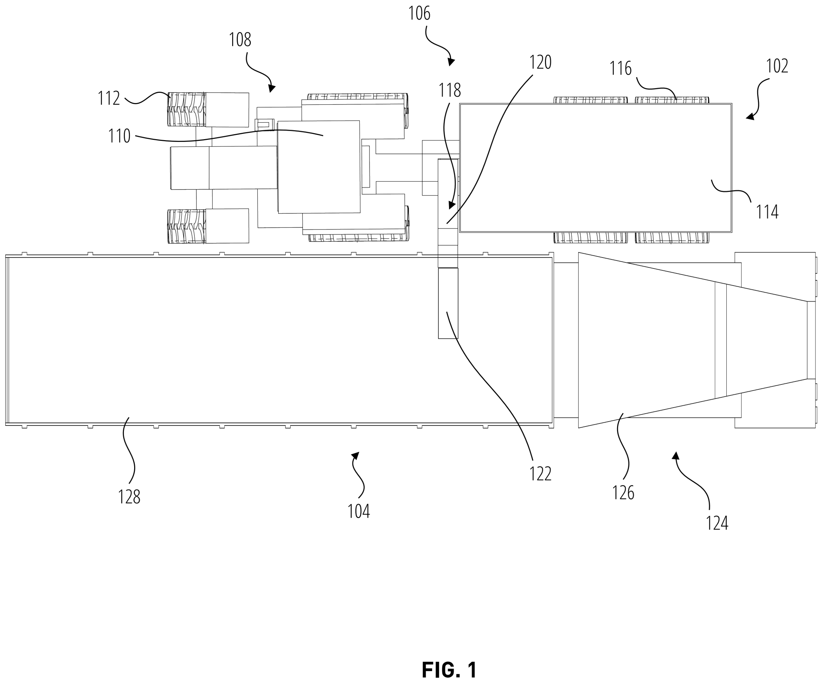

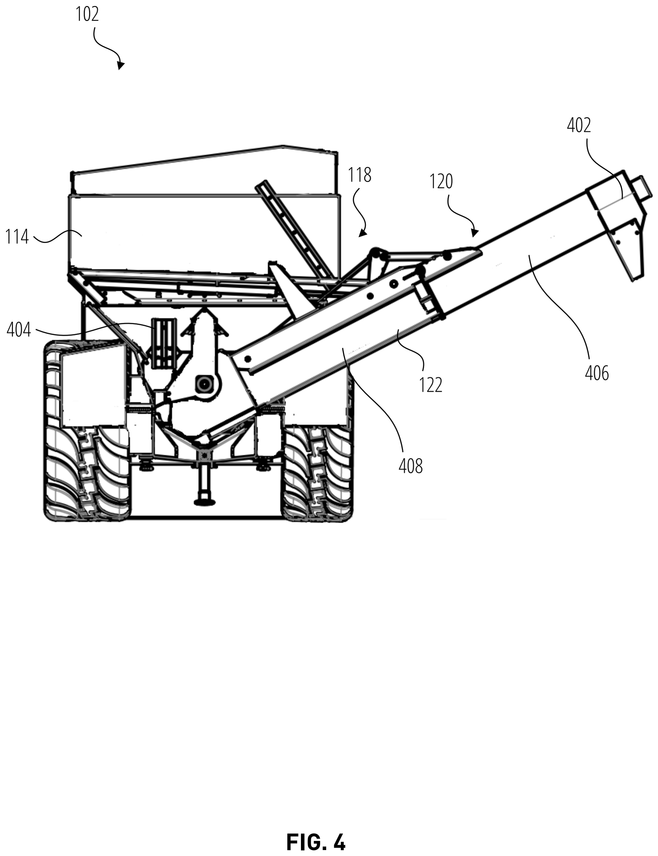

FIG. 1 is a simplified top view of an autonomous agricultural system 106 aligned with a transport vehicle 104 during an unloading operation according to one or more embodiments of the disclosure. The autonomous agricultural system 106 may include an agricultural vehicle 108 (e.g., a tractor) and a cart 102 (e.g., commodity trailer). The cart 102 may be coupled to a hitch of the agricultural vehicle 202 via one or more hitch attachments. The agricultural vehicle 202 may include a cabin 110 and may be supported by wheels 112 and/or tracks. The cart 102 may include a hopper 114 supported by wheels 116. The hopper 114 may define a container (e.g., bin) for receiving a commodity (e.g., grain) from a harvester vehicle (e.g., a combine harvester) and may include a tapered shape that facilitates a flow of the commodity towards an unloading system 118 of the cart 102. The unloading system 118 may be utilized to unload the commodity from the hopper 114 and into one or more of the plurality of transport vehicles 104. The unloading system 118 may include an auger system 120 including an auger 122 and a hydraulic motor. The unloading system 118 is described in greater detail below in regard to FIG. 4.

The transport vehicle 104 may include a truck portion 124 having a cabin 126 and a trailer 128 coupled to the truck portion 124.

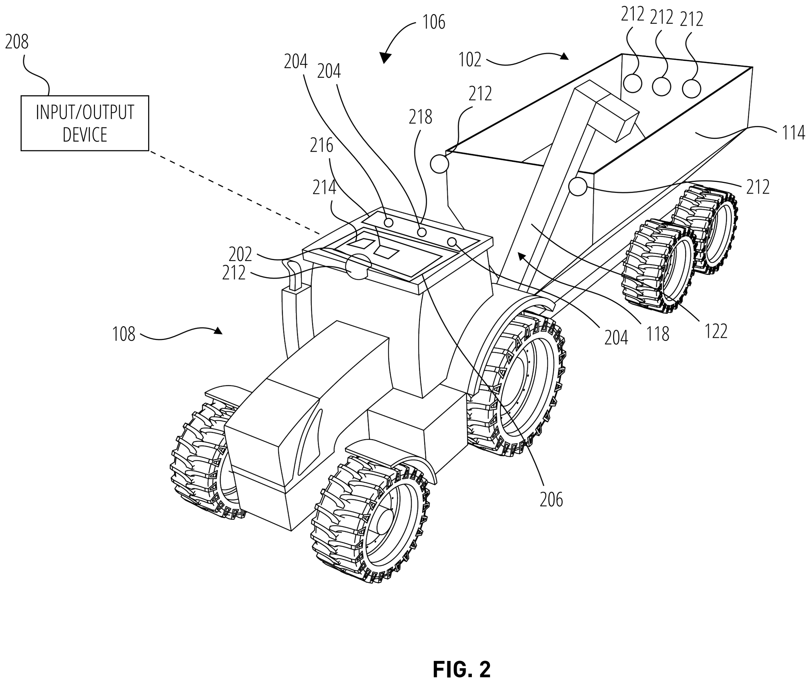

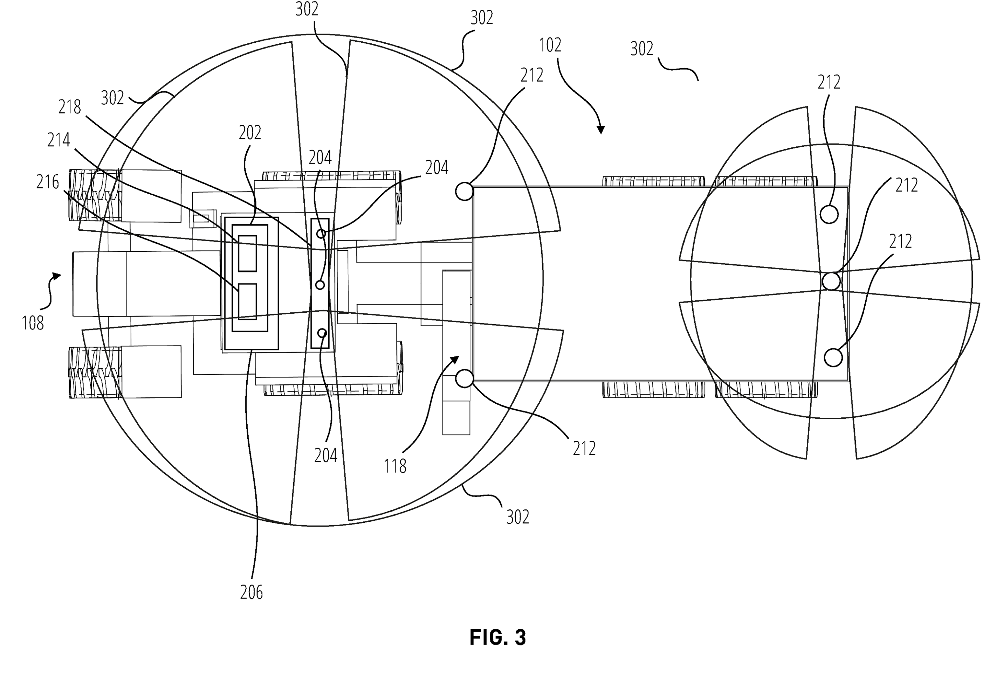

FIG. 2 is a simplified perspective view of the autonomous agricultural system 106 of FIG. 1 according to one or more embodiments of the disclosure. FIG. 3 is a simplified top view of the autonomous agricultural system 106 of FIG. 2. Referring to FIG. 2 and FIG. 3 together, as noted above, the autonomous agricultural system 106 may include the agricultural vehicle 108 and the cart 102, and the cart 102 may include the hopper 114 and the unloading system 118. In some embodiments, the agricultural vehicle 108 may include a tractor.

The agricultural vehicle 108 may further include a control system 206. The control system 206 may be configured to control one or more operations and devices of the agricultural vehicle 108 and/or the cart 102. In some embodiments, one or more parts of the control system 206 may be located in, for example, a cabin of the agricultural vehicle 108. In other embodiments, one or more parts of the control system 206 may be located on a roof of the cabin of the agricultural vehicle 108, in or proximate an engine compartment of the agricultural vehicle 108, or any other suitable portion of the agricultural vehicle 108. In one or more embodiments, one or more parts of the control system 206 may be located on or within the agricultural vehicle 108 and one or more other parts of the control system 206 may be located on or within the cart 102. In some embodiments, one or more parts of the control system 206 may be remote to the agricultural vehicle 108 and/or the cart 102.

The control system 206 may include a cart management system 202 for monitoring operations of the cart 102 and for guiding and controlling operations of the autonomous agricultural system 106 during an agricultural process. For example, based on input data (e.g., sensed data, received data, determined data), the cart management system 202 may guide and control operations of the autonomous agricultural system 106 to align the autonomous agricultural system 106 with the transport vehicles 104. Additionally, the cart management system 202, based on input data (e.g., sensed data, received data, determined data), may control unloading operations of the unloading system 118 of the cart 102.

The cart management system 202 may include at least one input/output device 208 (e.g., a display) and a perception system 210. The perception system 210 may be mounted on one or more of the agricultural vehicle 108 or the cart 102 of the autonomous agricultural system 106. Furthermore, the perception system 210 may include one or more sensors 204 (e.g., an array of sensors). The one or more sensors 204 may be at least partially operated by the cart management system 202. In some embodiments, the perception system 210 and the associated one or more sensors 204 are mounted on one or more of the agricultural vehicle 108 and the cart 102.

In some embodiments, the sensors 204 may include one or more of a light detection and ranging (LIDAR) camera, an RGB (red, green, and blue) camera, a stereo camera, ultrasonic sensors, or a radio detection and ranging (RADAR) device. In further embodiments, one or more of the sensors 204 may include a thermal camera. For example, one or more of the sensors 204 may include a long-wave infrared (LWIR) camera. In additional embodiments, one or more of the sensors 204 may include one or more of a mid-wave infrared (MWIR) camera, a short-wave infrared (SWIR) camera, a near infrared (NIR) camera, an ultraviolet camera (UV camera), or a visible light camera with an infrared filter.

In one or more embodiments, one or more of the sensors 204 may include a polarized camera (e.g., a polarized NIR, RGB, or SWIR camera). In particular, one or more of the sensors 204 may include one or more polarization filters that separate incoming light into polarized components. Furthermore, the polarized camera may include micro-polarizers integrated directly on the image sensor portion of the polarized camera that filter the incoming light for each detected pixel based on the pixel's polarized state (e.g., 0°, 45°, 90°, 135°). In one or more embodiments, the polarized camera may be configured to capture multiple images simultaneously with each captured image correlated to a different polarization state. Moreover, one or more algorithms may be utilized to process the images captured at different polarizations and generate relatively detailed images that can highlight features not typically visible in standard intensity-based imaging.

In some embodiments, the one or more sensors 204 include a stereo camera system including at least a first stereo camera and a second stereo camera. The first stereo camera and the second stereo camera may be mounted to the cabin 126 of the agricultural vehicle 108. For example, the each of the first stereo camera and the second stereo camera may be mounted on or proximate opposing lateral sides of the cabin 110 of the agricultural vehicle 108. The foregoing placement of the first stereo camera and the second stereo camera may enable a relatively wide perspective to capture large areas. In additional embodiments, the first stereo camera and the second stereo camera may be mounted on the cabin at different elevations (e.g., in a parallel configuration) where the angular centers of the fields of view of the first stereo camera and the second stereo camera are parallel to each other. In further embodiments, the first stereo camera and the second stereo camera may be mounted on one or more of the hood of the agricultural vehicle 108 or side walls of the cart 102.

The first and second stereo cameras may be mounted a fixed distance from each other (e.g., apart). The fixed distance can be referred to as the baseline. In some embodiments, the first distance may be at least 0.5m. As a result, the first and second stereo cameras may be able to capture image data of a same scene from slightly different angles. Each of first and second stereo cameras may include any of the cameras described herein. For example, each of first and second stereo cameras may include one or more of a monochrome camera, RGB camera, infrared camera, high-resolution camera, global shutter camera, rolling shutter camera, or a time-of-flight (ToF) camera. Furthermore, in some embodiments, each of the first and second stereo cameras may, respectively, include a plurality of cameras.

As noted above, in some embodiments, the sensors 204 may include a radio detection and ranging (RADAR) device. Furthermore, the RADAR device may include a synthetic aperture radar (SAR), or an inverse synthetic aperture radar (ISAR) configured to facilitate receiving relatively higher resolution data compared to conventional radars. The RADAR device may be configured to scan the radar signal across a range of angles to capture a 2D representation of the environment, each pixel representing the radar reflectivity at a specific distance and angle. In other embodiments, the RADAR device includes a 3D radar configured to provide range (e.g., distance, depth), velocity (also referred to as "Doppler velocity"), azimuth angle, and elevational angle. The RADAR device may be configured to provide a 3D radar point cloud to the cart management system 202.

In some embodiments, the sensor data may include one or more of image data, video data, thermal data, light detection and ranging (LIDAR) data, RADAR data, perception data, 3D data, and/or ultrasonic data. The sensors 204 may be configured to capture sensor data including one or more of relatively high resolution color images/video, relatively high resolution infrared images/video, or light detection and ranging data. In some embodiments, the sensors 204 may be configured to capture sensor data at multiple focal lengths. In some embodiments, the sensors 204 may be configured to combine multiple exposures into a single high-resolution image/video. In some embodiments, each of the sensors 204 may include multiple image sensors (e.g., cameras) with fields of view facing different directions.

The RADAR data may include one or more of analog-to-digital (ADC) signals, a radar tensor (e.g., a range-azimuth-doppler tensor), and a radar point cloud. In some embodiments, the output radar data includes a point cloud, such as a 2D radar point cloud or a 3D radar point cloud (also, simply referred to herein as a "3D point cloud"). In some embodiments, the output RADAR data includes a 3D radar point cloud.

In some embodiments, the sensors 204 are placed and oriented such that fields of view 302 of the sensors 204 encompass the agricultural vehicle 108, the cart 102, equipment (e.g., unloading system 118) of the cart 102, environments surrounding the autonomous agricultural system 106, and objects within the environments surrounding the autonomous agricultural system 106 (e.g., the transport vehicle 104). A field of view 302 may refer to an angular extent of an observable scene that a given sensor 204 can capture. For example, the fields of view 302 of the sensors 204 may at least substantially encompass entireties of the agricultural vehicle 108, the cart 102, and equipment (e.g., unloading system 118) of the cart 102. Furthermore, the fields of view 302 of the sensors 204 may provide at least substantially a 360° view of the environments surrounding the autonomous agricultural system 106. One or more of the sensors 204 may have a viewpoint (i.e., a position from which the field of view 302 is observed) originating from the agricultural vehicle 108, and one or more sensors 204 may have a viewpoint (i.e., a position from which the field of view 302 is observed) originating from the cart 102.

Some of the sensors 204 may have a respective fields of view. As is described in further detail below, in some embodiments, the sensors 204 may be configured and/or controlled to capture sensor data related to the cart 102, the transport vehicle 104, and, in some embodiments, the agricultural vehicle 108 while the agricultural vehicle 108 and/or the cart 102 are performing an agricultural process (e.g., aligning with the transport vehicle 104, unloading a commodity into a trailer 128 of the transport vehicle 104). Specifically, the sensors 204 may be controlled to capture sensor data such as images, videos, 3D representations, and/or other representations of the cart 102, and unloading system 118 of the cart, the transport vehicle 104, the agricultural vehicle 108, and information (e.g., any of the foregoing data) related to the environments surrounding or around the cart 102 and the agricultural vehicle 108.

In some embodiments, one or more of the sensors 204 includes a field of view that faces an interior of the hopper 114 of the cart 102. In other words, one or more of the sensors 204 includes a field of view that views (e.g., encompasses) a commodity within the hopper 114 of the cart 102. In some embodiments, one or more of the sensors 204 includes a field of view that faces the unloading system 118 of the cart 102. In one or more embodiments, one or more of the sensors 204 includes a field of view that faces a lateral side or away from a lateral side of the cart 102. In one or more embodiments, one or more of the sensors 204 includes a field of view that faces hydraulic joints of the cart 102. In some embodiments, one or more of the sensors 204 includes a field of view that generally faces the cart 102 (e.g., faces rearward from the agricultural vehicle 108). In one or more embodiments, one or more of the sensors 204 includes a field of view that faces toward a direction of travel of the agricultural vehicle 108. In one or more embodiments, one or more of the sensors 204 includes a field of view that faces away from a direction of travel of the agricultural vehicle 108.

Additionally, the sensors 204 may be configured and controlled to capture various types of sensor data related to the cart 102, the unloading system 118, the agricultural vehicle 108, transport vehicles 104, and/or environments surrounding the autonomous agricultural system 106. Specifically, the sensors 204 may be controlled to capture sensor data such as images of the cart 102, the unloading system 118, the agricultural vehicle 108, transport vehicles 104, and/or environments surrounding the autonomous agricultural system 106, videos of the cart 102, the unloading system 118, the agricultural vehicle 108, transport vehicles 104, and/or environments surrounding the autonomous agricultural system 106, 3D representations of the cart 102, the unloading system 118, the agricultural vehicle 108, transport vehicles 104, and/or environments surrounding the autonomous agricultural system 106, other visual depictions of the cart 102, the unloading system 118, the agricultural vehicle 108, transport vehicles 104, and/or environments surrounding the autonomous agricultural system 106, and/or other sensed information regarding the cart 102, the unloading system 118, the agricultural vehicle 108, transport vehicles 104, and/or environments surrounding the autonomous agricultural system 106.

Furthermore, as is described in greater detail below, the cart management system 202 may utilize the sensor data captured by the sensors 204 of the perception system 210 to monitor and control operation of the cart 102 and/or the agricultural vehicle 108. In particular, the cart management system 202 may utilize the sensor data captured by the sensors 204 to align the autonomous agricultural system 106 relative to a transport vehicle 104, orient the cart 102 relative to the agricultural vehicle 108, and/or unload a commodity from the cart 102 to a selected transport vehicle 104.

In some embodiments, the cart management system 202 may include or be operably coupled to one or more additional sensors 212. The additional sensors 212 may include any of the sensors described in regard to the one or more sensor 204. Furthermore, the additional sensors 212 may be mounted on one or more of the agricultural vehicle 108 or the cart 102. In some embodiments, one or more of the additional sensors 212 includes a field of view that faces forward on the agricultural vehicle 108 (e.g., in a direction of travel of the agricultural vehicle). In some embodiments, one or more of the additional sensors 212 includes a field of view that faces an interior of the hopper 114 of the cart 102. In other words, one or more of the additional sensors 212 includes a field of view that views (e.g., encompasses) a commodity within the hopper 114 of the cart 102. Furthermore, while only one additional sensor 212 is depicted with respective fields of view 302, the other additional sensors 212 may include any of the fields of view 302 described herein.

Referring still to FIG. 1 through FIG. 3 together, in some embodiments, the cart management system 202 may optionally include a Global Navigation Satellite System (GNSS) receiver 214 ("GNSS receiver 214") configured to determine precise geographical location, velocity, and time by processing signals received from multiple satellites within global constellations such as GPS, GLONASS, Galileo, and BeiDou. In particular, during operation, the GNSS receiver 214 may at least substantially continuously acquire and track satellite signals and calculate time delays between signal transmission and reception to compute pseudoranges, which are then used to determine a position of the GNSS receiver 214 through trilateration. For example, the GNSS receiver 214 may utilize various algorithms and signal processing techniques to correct for various errors and ensure a relatively high accuracy. The GNSS receiver 214 may operate in conventional manners and may provide GNSS data to the cart management system 202. In some embodiments, the cart management system 202 may utilize sensor data acquired via the perception system 210 combined with GNSS data (e.g., position data) and/or IMU data to monitor and control the unloading system 118 of the cart 102, validate orientations of an auger system 120 of the unloading system 118, align the cart 102 relative to a selected transport vehicle 104, orient the cart 102 relative to the agricultural vehicle 108, and/or unload a commodity from the cart 102 to a selected transport vehicle 104. For example, as is described in greater detail below, in some embodiments, sensor data, GNSS data, and IMU data may be fused together to form enhanced fused data, and the enhanced fused data may be utilized to perform any of the foregoing acts. In some embodiments, as is described below, one or more sensor fusion algorithms may be utilized to combine the sensor data with GNSS data and/or IMU data.

The control system 206 and/or the cart management system 202 may optionally include a wireless transceiver 216 for communicating via one or more wireless networks, such as, for example, WI-FI, Bluetooth, cellular, Li-Fi, Zigbee, Z-wave, and radio waves. In some embodiments, the wireless transceiver 216 may include a multi-protocol wireless receiver. The cart management system 202 may communicate with the transport vehicles, remote devices, and/or the input/output device 208 via the wireless transceiver 216.

In some embodiments, as noted above, the input/output device 208 may be remote from the cart management system 202 and may allow an operator of the agricultural vehicle 108 to provide input to, receive output from, and otherwise transfer data to and receive data from cart management system 202 of the control system 206. In some embodiments, the input/output device 208 may be within the cabin of the agricultural vehicle 108. In other embodiments, the input/output device 208 may be remote from agricultural vehicle 108. The input/output device 208 may include a mouse, a keypad or a keyboard, a joystick, a touch screen, a camera, an optical scanner, network interface, modem, other known I/O devices, or a combination of such I/O interfaces. The input/output device 208 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 208 is configured to provide graphical data to a display for presentation to an operator. The graphical data may be representative of one or more graphical user interfaces and/or any other graphical content as may serve a particular implementation. As is described in greater detail below, the control system 206 and the input/output device 208 may be utilized to display data (e.g., images and/or video data) received from the one or more cart management systems 202 and provide one or more recommendations of adjusting operation of the agricultural vehicle 108 and/or the cart 102 and/or video data to assist an operator in navigating the agricultural vehicle 108 and/or the cart 102.

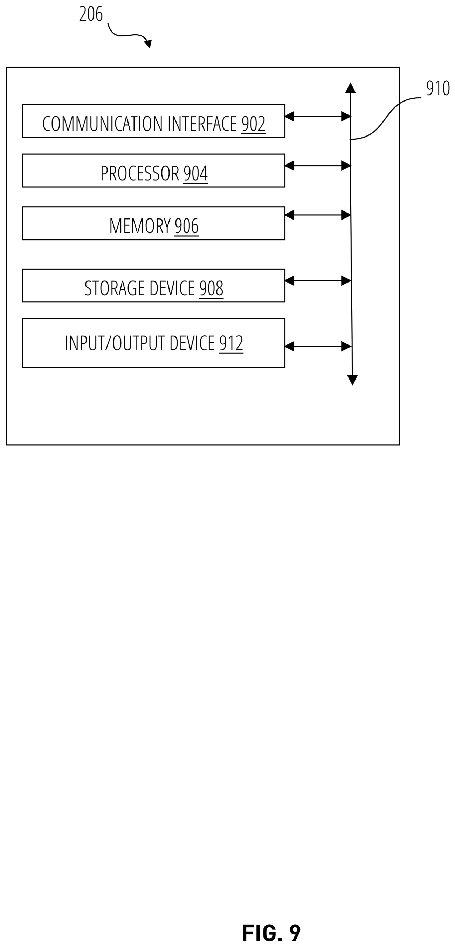

In some embodiments, the input/output device 208 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 9. Likewise, the control system 206 may include various types of computing devices. The control system 206 is described in greater detail below in regard to FIG. 9.

Referring still to FIG. 1 through FIG. 3, while the cart management system 202 is described as being part of the control system 206 of the agricultural vehicle 108, the disclosure is not so limited. Rather, the cart management system 202 may be part of (e.g., operated on) another device in communication with the control system 206 of the agricultural vehicle 108. In further embodiments, the cart management system 202 may be part of or operated on one or more servers or remote devices in communication with the control system 206. Additionally, while FIG. 2 through FIG. 3 show the cart management system 202 as being part of and/or utilized in relation to operation of an agricultural vehicle 108 and a cart 102, the disclosure is not so limited. Rather, the cart management system 202 may be part of and/or utilized in relation to operation of any agriculture vehicle (e.g., a combine) and/or implement.

The cart management system 202 may enable the autonomous agricultural system 106 to detect and select an appropriate transport vehicle 104 into which the autonomous agricultural system 106 may unload a commodity (e.g., grain) subsequent to receiving the commodity from a harvester (e.g., combine harvester). For example, responsive to approaching an unloading gate and/or unloading area of an agricultural field (e.g., a designated area or structure where harvested crops are intended to be transferred from field equipment, like combines or grain carts, to transport vehicles 104 or storage facilities), the control system 206 of the agricultural vehicle 108 may cause the sensors 204 of the control system 206 to detect vehicles (e.g., transport vehicles 104) within a given vicinity, select a transport vehicle 104, guide the agricultural vehicle 108 and cart 102 to the selected transport vehicle 104, and align the agricultural vehicle 108 and cart 102 with the transport vehicle.

FIG. 4 shows a front side view of the cart 102 according to one or more embodiments of the disclosure. As noted above, the cart 102 may include an unloading system 118. The unloading system 118 may be utilized to unload the commodity from the hopper 114 and into one or more of the plurality of transport vehicles 104. As mentioned above, the unloading system 118 may include an auger system 120 including an auger 122, a downspout 402, and a hydraulic motor 404. The auger 122 may include an upper vertical auger portion 406 and a lower vertical auger portion 408. The downspout 402 may be coupled to a distal end of the upper vertical auger portion 406 and may be configured to direct a flow of a commodity into the trailer 128 of the transport vehicle 104.

FIG. 4 depicts the auger 122 of the auger system 120 in an unfolded state (e.g., an extended state) for an unloading operation. As shown in FIG. 4, when the auger 122 of the auger system 120 is in a first unfolded state (e.g, extended state, unload state), the upper vertical auger portion 406 and the lower vertical auger portion 408 may be aligned relative to one another and may share a common center longitudinal axis. In other words, a center longitudinal axis of the upper vertical auger portion 406 may be collinear with a center longitudinal axis of the lower vertical auger portion 408. Moreover, the upper vertical auger portion 406 and the lower vertical auger portion 408 may defined a single, at least substantially straight, pathway (e.g., tube) for the commodity to travel through.

The auger 122 of the auger system 120 may be configurable in a folded state (e.g., retracted state, storage state, field state) as well. When the auger 122 of the auger system 120 is in a folded state (e.g, retracted state), the upper vertical auger portion 406 and the lower vertical auger portion 408 may be unaligned relative to one another and may not share a common center longitudinal axis. Rather, a center longitudinal axis of the upper vertical auger portion 406 may be oriented at an acute angle relative to the lower vertical auger portion 408. Furthermore, in the folded state and retracted state, the auger 122 may be folded back on itself. When the auger 122 of the cart 102 is in the folded state (e.g, a retracted state), the auger 122 may be against the hopper 114 of the cart 102. The folded state (e.g., a retracted state) may be used during transport or storage to reduce a width of the cart 102 and prevent damage to the auger 122.

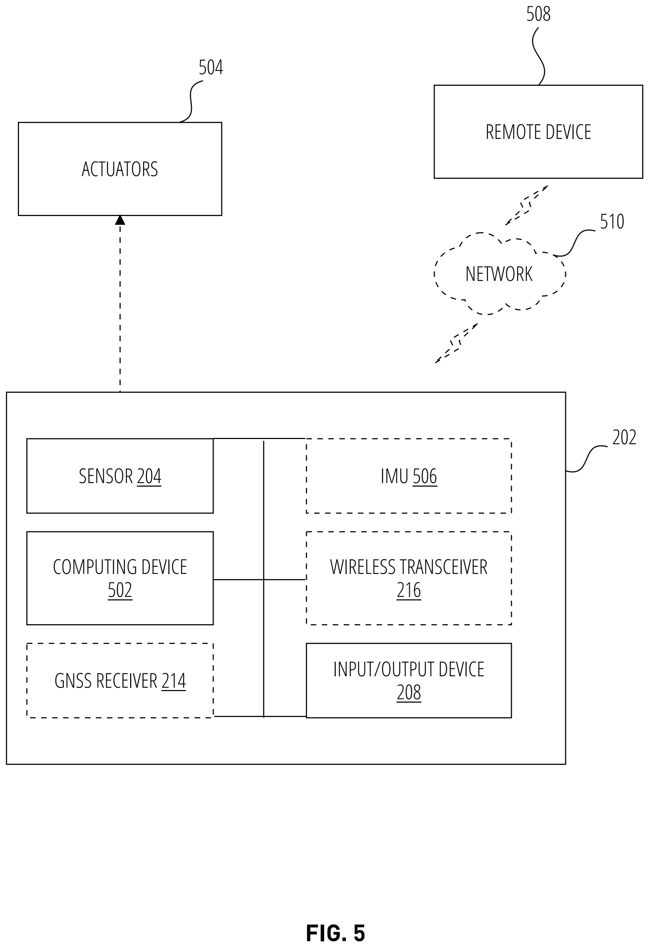

FIG. 5 is a schematic view of a cart management system 202 according to one or more embodiments of the disclosure. In one or more embodiments, the cart management system 202 may include a computing device 502, an input/output device 208, and one or more sensors sensor 204. The one or more sensors 204 and the input/output device 208 may be in operable communication with the computing device 502 and may be configured to provide data to and/or receive data and/or signals from the computing device 502. In additional embodiments, the one or more sensors 204 and/or the input/output device 208 may be separate and distinct from the cart management system 202 (e.g., as partially depicted in FIG. 1) and may be in operable communication with the cart management system 202. The computing device 502 may optionally be further operably coupled to actuators 504 of an agricultural vehicle (e.g., agricultural vehicle 108) and/or a cart (e.g., cart 102). The actuators 504 may include hydraulic valves, power switches, and/or any other known actuators for controlling operation of agricultural vehicles and carts (e.g., grain carts).

The one or more sensors 204 may include any of the sensors 204 described above in regard to FIG. 1 and FIG. 2 or any combination thereof.

As is described in greater detail below, the computing device 502 may include a communication interface, a processor, a memory, a storage device, the input/output device 208, and a bus. The computing device 502 is described in greater detail in regard to FIG. 9. In input/output device 208 may include any of the input/output devices 208 described above. In some embodiments, the cart management system 202 may not be coupled to actuators 504 of an agricultural vehicle and/or a cart.

Referring still to FIG. 5, in some embodiments, the cart management system 202 may optionally include an inertial measurement unit (IMU 506). The IMU 506 may be operably coupled to the computing device 502 and may provide measured and/or calculated data to the computing device 502. The IMU 506 may include a device that is configured to measure and output specific force, attitude, velocity, angular rate, and/or an orientation of a moving object (e.g., an agricultural vehicle) relative to a reference frame. The IMU 506 may combine accelerometers (for linear acceleration) and gyroscopes (for rotational rate) to determine the object's motion. In one or more embodiments, the IMU 506 may also include one or more magnetometers for heading reference.

Additionally, as noted above, the cart management system 202 may optionally include a GNSS receiver 214. The GNSS receiver 214 may be configured to determine precise geographical location, velocity, and time by processing signals received from multiple satellites within global constellations such as GPS, GLONASS, Galileo, and BeiDou. In particular, during operation, the GNSS receiver 214 may at least substantially continuously acquire and track satellite signals and calculate time delays between signal transmission and reception to compute pseudoranges, which are then used to determine a position of the GNSS receiver 214 through trilateration. For example, the GNSS receiver 214 may utilize various algorithms and signal processing techniques to correct for various errors and ensure a relatively high accuracy. The GNSS receiver 214 may operate in conventional manners and may provide GNSS data to the cart management system 202.

Furthermore, as noted above, the cart management system 202 may optionally include a wireless transceiver 216 for communicating via one or more wireless networks, such as, for example, WI-FI, Bluetooth, cellular, Li-Fi, Zigbee, Z-wave, and radio waves. In some embodiments, the wireless transceiver 216 may include a multi-protocol wireless receiver. The cart management system 202 may communicate with the transport vehicles, remote devices, and/or the input/output device 208 via the wireless transceiver 216.

As mentioned above, the input/output device 208 may be remote from the cart management system 202 and may allow an operator of the agricultural vehicle 108 to provide input to, receive output from, and otherwise transfer data to and receive data from cart management system 202 of the control system 206. In some embodiments, the input/output device 208 may be within the cabin of the agricultural vehicle 108. In other embodiments, the input/output device 208 may be remote from agricultural vehicle 108. The input/output device 208 may include a mouse, a keypad or a keyboard, a joystick, a touch screen, a camera, an optical scanner, network interface, modem, other known I/O devices, or a combination of such I/O interfaces. The input/output device 208 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 208 is configured to provide graphical data to a display for presentation to an operator. The graphical data may be representative of one or more graphical user interfaces and/or any other graphical content as may serve a particular implementation. As is described in greater detail below, the control system 206 and the input/output device 208 may be utilized to display data (e.g., images and/or video data) received from the one or more cart management systems 202 and provide one or more recommendations of adjusting operation of the agricultural vehicle 108 and/or the cart 102 and/or video data to assist an operator in navigating the agricultural vehicle 108 and/or the cart 102.

In some embodiments, the input/output device 208 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 9. Likewise, the control system 206 may include various types of computing devices. The control system 206 is described in greater detail below in regard to FIG. 9.

In some embodiments, the cart management system 202 may be in communication with (e.g., be operably coupled) to one or more remote devices 508. The one or more remote devices 508 can represent various types of computing devices with which users can interact. For example, the one or more remote devices 508 can be a mobile device (e.g., a cell phone, a smartphone, a PDA, a tablet, a laptop, a watch, a wearable device, etc.). In some embodiments, however, the one or more remote devices 508 can be a non-mobile device (e.g., a desktop or server). In some embodiments, the one or more remote devices 508 include one or more servers (e.g., computer or software systems) configured to provide services, data, or resources to other computers over a network. Furthermore, in some embodiments, the one or more remote devices 508 and the input/output device 208 may be a same device. Furthermore, the one or more remote devices 508 may perform and/or assist in performing any of the actions and processes attributed to the cart management system 202.

The cart management system 202 may communicate with the one or more remote devices 508 via a network 510. The network 510 may include one or more networks, such as the Internet, and can use one or more communications platforms or technologies suitable for transmitting data and/or communication signals.

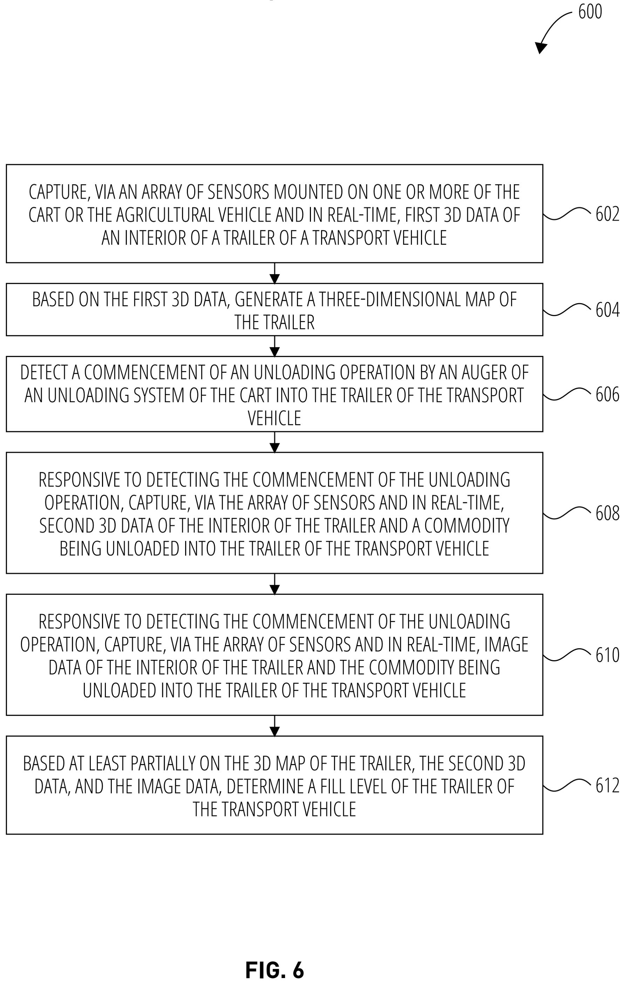

FIG. 6 shows a flowchart of a method 600 of monitoring and controlling operation of a cart (e.g., cart 102) and/or agricultural vehicle (e.g., agricultural vehicle 108) (e.g., a tractor). In one or more embodiments, a cart management system (e.g., cart management systems 202) may perform one or more acts of the method 600. For purposes of description of FIG. 6, the cart management system 202 is described as performing one or more acts of the method 600; however, it is understood that, in some embodiments, one or more acts of the method 600 may be performed by the control system 206 of the agricultural vehicle 108 and/or one or more remote devices (e.g., remote devices 508). Furthermore, although the example method 600 depicts a particular sequence of operations, the sequence may be altered without departing from the scope of the present disclosure. For example, some of the operations depicted may be performed in parallel or in a different sequence that does not materially affect the function of the method 600. In other examples, different components of an example device or system that implements the method 600 may perform functions at substantially the same time or in a specific sequence.

According to some embodiments, the method 600 includes capturing, via an array of sensors mounted on one or more of the cart or the agricultural vehicle and in real-time, first three-dimensional (3D) data of an interior of a trailer 128 of a transport vehicle 104, as shown in act 602 of FIG. 6. In some embodiments, the cart management system 202 may cause the array of sensors 204 to capture the first 3D data of the interior of the trailer 128 and the commodity being unloaded into the trailer 128 of the transport vehicle 104. The first 3D data may include any of the sensor data described herein. Furthermore, the first 3D data may be captured when the trailer 128 is empty and without any commodity disposed therein. Accordingly, anything generated or determined from the first 3D data may represent the trailer 128 in an empty state (e.g., an entirety of the capacity of the trailer 128 available for filling).

In some embodiments, capturing, via the array of sensors 204 and in real-time, first 3D data may include capturing LIDAR data via one or more LIDAR sensors of the sensors 204. In particular, the first 3D data may include LIDAR data alone or in combination with other 3D data. In some embodiments, the LIDAR data may include point-cloud data (e.g., data indicating a collection of points within a 3D space, each point representing a location where a laser pulse has reflected off an object). The LIDAR data may further include intensity data, range data, reflectivity data, and/or velocity data.

In one or more embodiments, the method 600 may include storing the first 3D data within a database for later use. For example, the cart management system 202 may store the first 3D data in memory of the cart management system 202 and may associate the first 3D data with the trailer 128 for which the first 3D data was captured.

The method 600 further includes, based on the first 3D data generating a 3D map of at least the interior of the trailer 128 in an empty state, as shown in act 604 of FIG. 6. For example, the cart management system 202 may generate a 3D map of the trailer 128 in an empty state. As noted above, the LIDAR data may include point-cloud data (e.g., data indicating a collection of points within a 3D space, each point representing a location where a laser pulse has reflected off an object), and each point in the cloud may correspond to a specific location within the trailer 128, with the Z-coordinate representing a height or depth. For instance, the first 3D data may include one or more of height data or depth data.

In generating the 3D map, the first 3D data may be analyzed and objects in the first 3D data may be identified and classified. In some embodiments, the first 3D data may be analyzed via one or more machine learning algorithms to analyze the geometric and radiometric properties of the points within the point-cloud data. For instance, the cart management system 202 may utilize one or more of deep neural network (DNN) instance models, convolutional neural networks (CNNs), single shot detectors (SSDs), region-convolutional neural networks (R-CNNs), Faster R-CNN, Region-based Fully Convolutional Networks (R-FCNs) and other machine learning models to perform the object detection and classification on the LIDAR data. In some embodiments, analyzing the sensor data may be performed utilizing one or more other or additional algorithms or models, such as, a YOLO (You Only Look Once) algorithm, Single Shot MultiBox Detector, EfficientDet, RetinaNet, DeepLab, U-Net, VoxelNet, PointNet, PointNet++, or MobileNet to analyze and classify objects within the first 3D data. Additionally, the cart management system 202 may utilize one or more of Random Forest, Support Vector Machine, Gradient Boosting Trees, K-nearest Neighbors (k-NNs), or t-Distributed Stochastic Neighbor Embedding (t-SNE) to analyze and classify objects within the first 3D data.

Subsequent to object identification and classification, a digital continuous 3D surface may be generated from the discrete points in the point-cloud data. The digital continuous surface may be generated using interpolation techniques, such as, for example, Triangulated Irregular Network (TIN) and Inverse Distance Weighting (IDW). For example, using a TIN, the cart management system 202 may create a network of non-overlapping triangles from the points, providing a detailed 3D map. As another non-limiting example, using an IDW, the cart management system 202 may estimate values of unknown points based on the values of nearby known points, with closer points having more influence. Once the digital continuous 3D surface is interpolated, a mesh or grid may be generated that represents the interior surfaces of the trailer 128. The mesh or grid may be textured with additional data, such as material properties, to provide a more realistic final representation, which forms the 3D map.

In one or more embodiments, the method 600 may include storing the 3D map of the trailer 128 within a database for later use. For example, the cart management system 202 may store the 3D map of the trailer 128 in memory of the cart management system 202 and may associate the 3D map with the trailer 128 for which the first 3D data was captured.

In some embodiments, the method 600 includes detecting a commencement of an unloading operation by an auger 122 of an unloading system 118 of the cart 102 into a trailer 128 of a transport vehicle 104, as shown in act 606 of FIG. 6. The cart management system 202 may detect a commencement of an unloading operation by the auger 122 of the unloading system 118 of the cart 102 into the trailer 128 of the transport vehicle 104.

In one or more embodiments, detecting a commencement of an unloading operation by the auger 122 of the unloading system 118 of the cart 102 into the trailer 128 of the transport vehicle 104 may include capturing, via the array of sensors, sensor data of the unloading system 118 of the cart 102. For example, the cart management system 202 may cause the array of sensors to capture sensor data of the unloading system 118 of the cart 102. In some embodiments, capturing sensor data of the unloading system 118 may include capturing representations of the unloading system 118 within the sensor data. The one or more sensors 204 may include any of the sensors described herein, and the sensor data may include any of the sensor data described herein. Furthermore, in some embodiments, the cart management system 202 may utilize any of the additional sensors 212 described herein to capture one or more portions of the sensor data. In some embodiments, the sensor data may be captured in real-time and/or continuously.

In some embodiments, capturing the sensor data may be triggered by the autonomous agricultural system 106 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 106 crossing a geofence and/or virtual boundary, the cart management system 202 of the autonomous agricultural system 106 may cause the one or more sensors 204 to capture sensor data related to the unloading system 118 of the cart 102. In additional embodiments, the cart management system 202 of the autonomous agricultural system 106 may monitor or be in communication with a device that monitors a geofence and/or virtual boundary and may cause the one or more sensors 204 to capture sensor data related to unloading system 118 of the cart 102 responsive to crossing the geofence and/or virtual boundary. As a result of the foregoing, capturing the sensor data may be triggered prior to an unloading operation. In some embodiments, capturing, via the array of sensors and in real-time, sensor data of the unloading system 118 of the cart 102 may be triggered by initiating unloading operation. In some embodiments, capturing, via the array of sensors and in real-time, sensor data of the unloading system 118 of the cart 102 may be triggered by the agricultural vehicle 108 aligning with a selected transport vehicle 104.

In one or more embodiments, capturing the sensor data may be triggered by one or more events. The events may include alignment with a transport vehicle 104, initiation of an unloading operation, alignment with an agricultural harvester, or any other event. In some embodiments, capturing the sensor data may be performed at least substantially continuously throughout an unloading operation and/or an agricultural process (e.g., harvesting process) or a portion of the agricultural process.

In some embodiments, capturing sensor data of the unloading system 118 may include capturing sensor data of the auger 122 of the auger system 120 of the unloading system 118. In one or more embodiments, capturing sensor data of the auger 122 of the auger system 120 of the unloading system 118 may include capturing sensor data of a downspout 402 of the auger 122 of the auger system 120.

Detecting a commencement of an unloading operation by the auger 122 of the unloading system 118 of the cart 102 into the trailer 128 of the transport vehicle 104 may further include analyzing the sensor data to detect the commencement of the unloading operation by the auger 122 of the unloading system 118 of the cart 102 into the trailer 128 of the transport vehicle 104. For example, the cart management system 202 may analyze the sensor data to detect (e.g., identify) the commencement of the unloading operation by the auger 122 of the unloading system 118 of the cart 102 into the trailer 128 of the transport vehicle 104.

In some embodiments, analyzing the sensor data to detect the commencement of the unloading operation by the auger 122 of the unloading system 118 of the cart 102 into a trailer 128 of a transport vehicle 104 comprises analyzing sensor data of the auger 122 of the auger system 120 of the unloading system 118 and detecting (e.g., identifying) a commodity leaving a downspout 402 of the auger 122. For example, a commodity falling from the downspout 402 into the trailer 128 of the transport vehicle 104 may be detected, and when the commodity starts to fall from the downspout 402 may be detected.

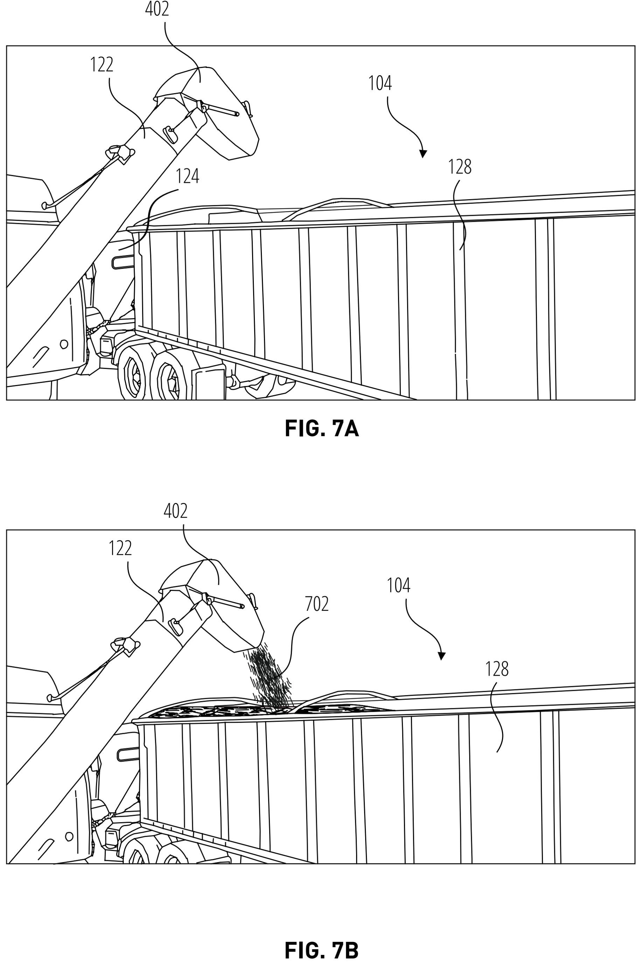

FIG. 7A and FIG. 7B show perspective views of a transport vehicle 104 and an unloading system 118 (e.g., auger 122) of a cart 102 during an unloading operation according to one or more embodiments of the present disclosure. In particular, FIG. 7B shows a commodity 702 falling from the downspout 402 of the auger 122 of the unloading system 118 of the cart 102 during an unloading operation. FIG. 7A shows the auger 122 of the unloading system 118 of the cart 102 and the trailer 128 of the transport vehicle 104 at a time immediately preceding or after an unloading operation.

Referring to FIG. 6, FIG. 7A, and FIG. 7B together, the sensor data may be analyzed to identify objects (e.g., the agricultural vehicle 108, the cart 102, the transport vehicle 104, the unloading system 118, the auger 122, the downspout 402, a commodity 702, living organisms, obstacles) depicted within the sensor data. For example, the cart management system 202 may analyze the sensor data to identify objects depicted in the sensor data. In some embodiments, the cart management system 202 may determine bounding boxes (e.g., a point, width, and height) of the detected objects. In additional embodiments, the cart management system 202 may perform object segmentation (e.g., object instance segmentation or sematic segmentation) to associate specific pixels of the sensor data with the detected one or more objects. In further embodiments, the cart management system 202 may further classify (e.g., label) the detected objects according to determined object types.

In some embodiments, the sensor data may be analyzed via deep learning techniques (e.g., deep neural networks) to detect and classify the objects within the sensor data. For example, the cart management system 202 may utilize one or more of deep neural network (DNN) instance models, convolutional neural networks (CNNs), single shot detectors (SSDs), region-convolutional neural networks (R-CNNs), Faster R-CNN, Region-based Fully Convolutional Networks (R-FCNs) and other machine learning models to perform the object detection and classification. In some embodiments, analyzing the sensor data may be performed utilizing one or more other or additional algorithms or models, such as, a YOLO (You Only Look Once) algorithm, Single Shot MultiBox Detector, EfficientDet, RetinaNet, DeepLab, U-Net, or MobileNet.

Any of the foregoing models may be trained to perform object detection and classification. For example, in some embodiments, the models may be trained using a combination of real sensor data (e.g., sensor data captured via one or more sensors) and synthetic data (e.g., data that is artificial generated using algorithms and/or computer simulations). In some embodiments, the synthetic data may include sensor data depicting objects of interest (e.g., transport vehicles, agricultural vehicles, carts, augers, transport vehicles, commodities, living organisms, telecommunication boxes, safety poles, power boxes, road markers, road signs, etc.) with differing environments (e.g., types, amounts, and heights of vegetation, occlusion levels, light configurations, viewing angles and types (e.g., fish eye and perspective)).

In one or more embodiments, analyzing the sensor data to identify the agricultural vehicle 108, the cart 102, the unloading system 118, the auger 122, the transport vehicle 104, and/or the commodity 702 may include performing semantic segmentation on the sensor data. Performing the semantic segmentation may include classifying each pixel in a given image into a specific category, such as "agricultural vehicle," "trailer," "transport vehicle," "cart," "auger," "commodity," or "background." The pixel-level classification may ensure precise identification and differentiation between various objects (e.g., components) within a scene captured within the sensor data.

In some embodiments, sensor data from multiple sensors 204 (e.g., sensor data from sensors 204) may be combined to generate combined sensor data, and the cart management system 202 may perform the one or more object detection operations on the combined sensor data, and the combined sensor data. In other embodiments, the cart management system 202 performs the one or more object detection operations on the sensor data from each sensor 204 individually. In some embodiments, the cart management system 202 is configured to perform object tracking operation on the detected objects in the sensor data, each tracked object defined by pixels of the sensor data (e.g., color data, SWIR data, NIR data). In some embodiments, as noted above, the sensors 204 include at least partially overlapping fields of view 302. In additional embodiments, the sensor 204 may not include overlapping fields of view 302.

In one or more embodiments, the object segmentation (e.g., semantic segmentation) operation may be performed on the sensor data from each sensor 204 separately or may be performed on combined sensor data. In some embodiments, the object segmentation operation includes an instance segmentation operation. The object detection, object segmentation, and/or object tracking may be performed using an object detection neural network specifically trained for identifying and labeling one or more agricultural objects. The object detection neural network may include associations between different types of agricultural objects (e.g., the agricultural vehicle 108 (e.g., tractor), the cart 102, the unloading system 118, the transport vehicle 104, a commodity 702, etc.), which may be provided in metadata of labeled sensor data generated from the sensor data. In embodiments where the sensor data has been segmented, the sensor data may not include pixels that have not been labeled as an object and/or have been labeled as an object of interest (e.g., an agricultural object) (background pixels).

In some embodiments, the analyzing the sensor data to identify the agricultural vehicle 108, the cart 102, the unloading system 118, the auger 122, the transport vehicle 104, and/or the commodity 702 may include detecting features of detected objects. As used herein "features" refers to specific identifiable parts and/or characteristics of objects captured in the sensor data. The features may include elements such as the wheels 112, the cabin 126, the hopper 114, the unloading system 118, the auger 122, the trailer 128 of a transport vehicle 104, etc. The features may be detected and classified using any of the techniques described herein.

In some embodiments, responsive to not detecting the commodity 702 at one moment in time (e.g., a given frame of sensor data), and then detecting the commodity 702 at a next moment in time (e.g., a next frame of sensor data), the cart management system 202 may determine that the unloading operation has commenced. In one or more embodiments, the cart management system 202 may utilize continuous video data from the sensors to determine that the unloading operation has commenced. For instance, the video data can be analyzed frame by frame, and the cart management system 202 can detect changes in the video data, such as an appearance of commodity 702 falling from the auger 122. By comparing consecutive frames, the cart management system 202 can identify the start of the unloading operation. In further embodiments, the cart management system 202 may use color detection algorithms to identify the color of the commodity 702. When the cart management system 202 may detects a specific color of the commodity 702 proximate the downspout 402 of the auger 122, the cart management system 202 may determine that the unloading operation has commenced. In yet further embodiments, the cart management system 202 may utilize motion detection capabilities to identify movement of commodity 702 as it falls from the auger 122. When the cart management system 202 may detects motion in the downspout 402 of the auger 122, the cart management system 202 may determine that the unloading operation has commenced.

The method 600 may further include, responsive to detecting the commencement of the unloading operation, capture, via the array of sensors 204 and in real-time, second three-dimensional (3D) data of the interior of the trailer 128 and the commodity 702 being unloaded into the trailer 128 of the transport vehicle 104, as shown in act 608 of FIG. 6. For example, the cart management system 202 may cause the array of sensors 204 to capture the second 3D data of the interior of the trailer 128 and the commodity 702 being unloaded into the trailer 128 of the transport vehicle 104. The second 3D data may include any of the sensor data described above in regard to the first 3D data.

In some embodiments, capturing, via the array of sensors 204 and in real-time, second 3D data may include capturing LIDAR data via one or more LIDAR sensors of the sensors 204. In some embodiments, the LIDAR data may include point-cloud data (e.g., data indicating a collection of points within a 3D space, each point representing a location where a laser pulse has reflected off an object). The LIDAR data may further include intensity data, range data, reflectivity data, and/or velocity data.

Capturing the second 3D data of the interior of the trailer and the commodity 702 being unloaded into the trailer 128 of the transport vehicle 104 may be triggered via any of the manners described above in regard to act 606 and capturing the first 3D data. Furthermore, the second 3D data may be capture in real-time and at least substantially continuously. Additionally, in one or more embodiments, 3D maps may be generated from the second 3D data via any of the manners described above in regard to the first 3D data. For example, 3D maps of the trailer 128 and the commodity 702 within the trailer 128 may be continuously generated based on continuously captured second 3D data.

Additionally, the method 600 may include, responsive to detecting the commencement of the unloading operation, capture, via the array of sensors 204 and in real-time, image data of the interior of the trailer 128 and the commodity 702 being unloaded into the trailer 128 of the transport vehicle 104, as shown in act 610 of FIG. 6. For example, the cart management system 202 may cause the array of sensors 204 to capture the image data.

Capturing the image data may be triggered via any of the manners described above in regard to act 604 through act 608. Furthermore, the image data may be analyzed via any of the manners described above in regard to act 604 through act 608 to identify and classify objects (e.g., the trailer 128, the commodity 702, the unloading system 118, etc.) within the image data to generate labeled image data.

Furthermore, in some embodiments, the method 600 may optionally include fusing the labeled image data within the second 3D data, fusing the labeled image data with the second 3D data to form enhanced fused data. For example, the cart management system 202 may fuse the labeled image data with the second 3D data by correlating each point and/or pixel of the second 3D data with detected features and/or objects of the labeled image data to form enhanced fused data. In some embodiments, two-dimensional image features of the labeled image data are mapped onto 3D point-cloud data of the second 3D data. Mapping the two-dimensional image features of the labeled image data onto the 3D point-cloud data of the second 3D data may include aligning coordinate systems of the sensors 204 utilized to capture the sensor data of the labeled image data and sensors 204 utilized to capture the second 3D data. Techniques such as image registration and transformation matrices may be used to achieve the alignment. Additionally, each point in the 3D point-cloud data may be matched with a corresponding feature in the 2D image data. For example, points in the 3D point-cloud data that represent the trailer 128 of the transport vehicle 104 may matched with trailer features detected in the 2D image data.

In some embodiments, fusing the labeled image data with the second 3D data may include fusing the labeled image data with the second 3D data via any of the manners described in U.S. Patent Applications No. 18/922,227, No. 18/922,252, No. 18/956,548, and No. 18/9222,267, to Christiansen et. al., filed on October 21, 2024. As a non-limiting example, labeled image data may be fused with the second 3D data using a fusion manager of the cart management system 202. The cart management system 202 may be configured to perform one or more or more sensor fusion operations to form enhanced fused data including the labeled image data and the second 3D data. For example, the fusion manager of the cart management system 202 may be configured to project the second 3D data onto the labeled image data, such that the enhanced fused data includes the labeled image data and the second 3D data in 2D space. In other words, in some such embodiments, the fusion of the labeled image data and the second 3D data occurs in 2D, and second 3D data is transposed into 2D space with the labeled image data and points in the second 3D data are matched to bounding boxes of objects (e.g., instances of objects and/or features labeled via the manners described herein) in the labeled image data. In some embodiments, the second 3D data include more sparse data compared to the labeled image data. In some such embodiments, since the data fusion occurs in 2D, the data fusion may use less processing power and may process the data faster compared to data fusion in 3D.

Projecting the second 3D data onto the labeled image data may include formatting and aligning the second 3D data with the labeled image data, such as by aligning the timestamps of the second 3D data and labeled image data; transforming the 3D coordinates of the second 3D data to 2D using, for example, a projection matrix to map the 3D points onto a 2D plane (e.g., such as perspective projection or orthographic projection); and applying the projection matrix to each point in the second 3D data. In some embodiments, the point-cloud data of the second 3D data may be transformed into a lower-dimensional representation. For example, the cart management system 202 may transform the point-cloud data of the second 3D data utilizing a PointPillars algorithm. In some embodiments, transforming the point-cloud data of the second 3D data may include dividing the point-cloud data into vertical columns, or "pillars." Each pillar represents a small, localized region of a 3D space represented in the point-cloud data. In some embodiments, transformation of the point-cloud data of the second 3D data includes using a neural network, specifically PointNet, to encode features (e.g., coordinates of each point within a pillar, a strength of a reflected signal at each point of a pillar, a height of each point of a pillar relative to a ground surface, etc.). The encoding process reduces a dimensionality of the point-cloud data while preserving essential spatial information. By combining the 3D information from the point-cloud data with the visual information from labeled image data, the cart management system 202 may achieve a more comprehensive representations of the objects and environment depicted in the labeled image data.

The second 3D data may be projected onto the labeled image data with one or more fusion operations (e.g., fusion algorithms), such as MV3D, AVOD, voxels such as VoxelNet, F-PointNet, MVFP, and raw point clouds such as PointNet, PointNet++, and PointRCNN to convert the 3D data of the second 3D data to a 2D plane representation, such as a range view, spherical view, cylindrical view, or a bird's-eye view (BEV) projection techniques.

In some embodiments, the enhanced fused data includes and corresponds to pixels of objects in the labeled image data and the second 3D data. In other words, pixels that do not include an object classification (e.g., an instance) may not be included in the enhanced fused data. Stated another way, pixels of the background (not including objects) may be disregarded and may not be included in the enhanced fused data. By way of non-limiting example, second 3D data may be projected onto the labeled image data and only pixels of the enhanced fused data corresponding to the objects identified and classified in the labeled image data may be included in the enhanced fused data. In other words, in some such embodiments, the enhanced fused data may include only pixels corresponding to bounding boxes (discussed in greater detail below) of identified objects in the labeled image data and the corresponding data from the second 3D data.

In one or more embodiments, since the labeled image data fused with the second 3D data has been segmented, the fusion operation may be performed relatively faster and using less processing power compared to embodiments where the labeled image data has not been segmented. In other words, since the labeled image data fused with the second 3D data does not include the background pixels, the fusion operation may be performed significantly faster than conventional fusion operations. The faster fusion of the labeled image data and the second 3D data facilitates real-time object detection and avoidance during performance of one or more agricultural operations using the imaging controller.

As noted above, the cart management system 202 may determine bounding boxes (e.g., a point, width, and height) of objects detected in the labeled image data and/or the second 3D data by way of the transformation and segmentation processes described herein. In some embodiments, the bounding boxes may be determined during one or more of act 608 or act 610. In some embodiments, the cart management system 202 may define 3D bounding boxes around detected objections (e.g., the agricultural vehicle 108, the cart 102, the transport vehicle 104, etc.). The 3D bounding box may include a rectangular box that encapsulates a detected object in a 3D space. The 3D bounding boxes may be iteratively refined (e.g., boundaries of the bounding boxes may be iteratively adjusted) to ensure that the 3D bounding boxes accurately enclose detected objected. As a result, the 3D bounding boxes may provide relatively accurate representations of the positions, and the orientations of each object detected in the labeled image data and the second 3D data.

In one or more embodiments, the cart management system 202 may integrate metadata into the enhanced fused data to map classification onto 3D data (e.g., 3D point-cloud data, the second 3D data). In some embodiments, the metadata may be integrated during one or more of act 608 or act 610. In some embodiments, the enhanced fused data includes the metadata of the labeled image data and the metadata of second 3D data. By way of non-limiting example, each pixel of the enhanced fused data may include one or more of (e.g., each of) RGB image data, SWIR image data, LWIR image data, a flag if pixels data from different sensors do not agree, priority data for pixels within overlapping fields of view of the sensor data, velocity, depth (e.g., distance) data, elevational data (e.g., elevational angle), azimuth data (e.g., azimuth angle), an object label (e.g., an instance label), association data, a timestamp, and metadata (e.g., object classification data, object association data, data with respect to which of multiple cameras the sensor data for each pixel is associated, flags for sensor data that does not match sensor data of another camera).

In some embodiments, the method 600 may not include fusing the labeled image data with the second 3D data, and act 612 of method 600, described below, may be performed using the second 3D data and the captured image data separately without using fused data.

In some embodiments, the method 600 may include, based at least partially on the 3D map of the trailer 128 in an empty state, the second 3D data, and the image data, determining a fill level of the trailer 128 of the transport vehicle 104, as shown in act 612 of FIG. 6. For example, the cart management system 202 may, based at least partially on the 3D map of the trailer 128 in an empty state, the second 3D data, and the image data, determine a fill level of the trailer 128 of the transport vehicle 104. Furthermore, as is discussed below, responsive to determining that a fill level of the trailer 128 or a compartment of the trailer is approaching an upper limit of the trailer 128, the cart management system 202 may move the autonomous agricultural system 106 to unloading the commodity 702 into a different compartment of the trailer 128 or terminate the unloading operation entirely.

In one or more embodiments, the cart management system 202 may use a threshold-based detection method to determine a fill level of the trailer 128. For example, the cart management system 202 may utilize predefined depth or height thresholds that correspond to different fill levels within the trailer 128 of the transport vehicle 104. The depth or height thresholds may be determined based on dimensions of the trailer 128 of the transport vehicle 104 (e.g., the 3D map of the trailer 128) and maximum or desired fill levels of the trailer 128 of the transport vehicle 104. As the commodity 702 fills the trailer 128, the cart management system 202 may utilize the second 3D data, which may be captured in real-time and continuously, to continuously generate 3D maps (e.g., depth or height maps) from the second 3D data. The cart management system 202 may then analyze the continuously generated 3D maps in real-time to monitor a distance between an upper limit of the trailer 128 and a top surface of the commodity 702 within the trailer 128.

In particular, the cart management system 202 compares the values (e.g., height or depth values) in the 3D maps to the predefined defined threshold values (e.g., threshold height or depth values). For instance, if the threshold for a 75% fill level is set at a certain depth or height value, the cart management system 202 checks if any points within the 3D maps fall below or exceeds this threshold. As is discussed in greater detail below, when the values reach or exceed the predefined depth thresholds, the cart management system 202 may trigger response actions. For example, if a value indicates that the commodity 702 is approaching the upper limit of the trailer 128, the cart management system 202 cause the autonomous agricultural system 106 to move the autonomous agricultural system 106 to unloading the commodity 702 into a different compartment of the trailer 128 or terminate the unloading operation entirely. In some embodiments, the cart management system 202 may operate in a feedback loop, where the second 3D data is continuously analyzed, and adjustments to the unloading operation may be made in real-time.

In one or more embodiments, the cart management system 202 may use a volume calculation method to determine a fill level of the trailer 128. For example, the cart management system 202 may integrate the second 3D data over an area of the trailer 128 to estimate a total volume of commodity 702 present. The volume calculation method may provide a relatively precise measurement of a fill level in terms of a volume.

In particular, as noted above, the cart management system 202 may generate 3D maps of the trailer 128 and commodity 702 within the trailer 128. The cart management system 202 may then integrate the depth or height values across an entire surface of the commodity 702 within the trailer 128. The integration process may include summing the depth or height values and converting these values into a volume measurement. The volume measurement may include using numerical integration techniques, where the depth or height values are multiplied by the corresponding point area and summed to obtain a total volume. By calculating the volume of commodity 702, the cart management system 202 can determine accurate fill levels of the trailer 128. Again, if the determined fill levels indicate that the commodity 702 is approaching the upper limit of the trailer 128, the cart management system 202 cause the autonomous agricultural system 106 to move the autonomous agricultural system 106 to unloading the commodity 702 into a different compartment of the trailer 128 or terminate the unloading operation entirely. In some embodiments, the cart management system 202 may operate in a feedback loop, where the second 3D data is continuously analyzed, and adjustment to the unloading operation may be made in real-time.

In one or more embodiments, the cart management system 202 may use surface profiling methods to determine a fill level of the trailer 128. Surface profiling methods may generate a 3D profile of an upper surfaces of the commodity 702 using the 3D maps generated from the second 3D data. Surface profiling allows the cart management system 202 to detect uneven filling and ensure that the commodity 702 is distributed evenly throughout the trailer 128.

In particular, as noted above, the cart management system 202 may generate 3D maps of the trailer 128 and commodity 702 within the trailer 128. The 3D maps may result in or may be used to create a 3D profile of the commodity 702. The cart management system 202 may compare the 3D profile of the surface of the commodity 702 with known dimensions of the trailer 128 (e.g., the 3D map of the trailer 128 at an empty state). Via the comparison, the cart management system 202 may determine how much of a capacity of the trailer 128 has been filled and identify any areas where the commodity 702 is unevenly distributed. Responsive to detecting uneven filling, the cart management system 202 may adjust a position and/or orientation of the auger 122 to ensure even distribution. Again, if the determined fill levels indicate that the commodity 702 is approaching the upper limit of the trailer 128, the cart management system 202 cause the autonomous agricultural system 106 to move the autonomous agricultural system 106 to unloading the commodity 702 into a different compartment of the trailer 128 or terminate the unloading operation entirely. In some embodiments, the cart management system 202 may operate in a feedback loop, where the second 3D data is continuously analyzed, and adjustment to the unloading operation may be made in real-time.

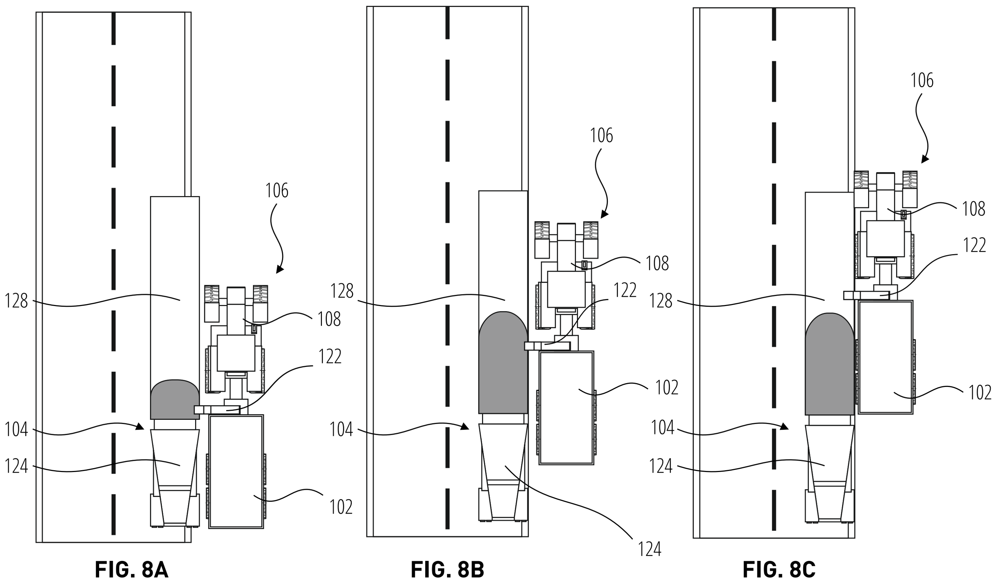

As noted above, in some embodiments, responsive to determined fill levels of the trailer 128 indicating that the commodity 702 is approaching the upper limit of the trailer 128, the cart management system 202 may cause the autonomous agricultural system 106 to move relative to the transport vehicle 104 and to unload the commodity 702 into a different compartment. For instance, the cart management system 202 may cause the autonomous agricultural system 106 to move forward or backward such the auger 122 is aligned with a different compartment or portion of the trailer 128 of the transport vehicle 104. FIG. 8A, FIG. 8B, and FIG. 8C show various stages of an autonomous agricultural system 106 unloading a commodity into a trailer 128 of a transport vehicle 104. For example, FIG. 8A through FIG. 8C show the autonomous agricultural system 106 unloading a commodity into different compartments of the trailer 128 of the transport vehicle 104. Referring to FIG. 6 and FIG. 8A through FIG. 8C together, moves between the compartments of the trailer 128 may be caused by the cart management system 202 responsive to a predetermined amount of time elapsing or a predetermined number of actuator actions occurring during an unloading operation. Subsequently, act 606 through act 612 may be repeated for the different compartment or portion of the trailer 128 of the transport vehicle 104.

As mentioned above, in additional embodiments, responsive to determined fill levels of the trailer 128 indicating that the commodity 702 is approaching the upper limit of the trailer 128, the cart management system 202 may terminate the unloading operation. For instance, the cart management system 202 may disengage the auger 122 by turning off the PTO shaft and/or hydraulic motor 404 operating the auger 122. Furthermore, the cart management system 202 may then disengage the autonomous agricultural system 106 from alignment with the transport vehicle 104 and may return the autonomous agricultural system 106 to a combine harvester to collect additional commodity.

Referring still to FIG. 6, in some embodiments, the cart management system 202 may receiving an indication of the commencement of the unloading operation from the control system 206 of the agricultural vehicle 108. Additionally, in some embodiments, the cart management system 202 may provide an estimation of a fill level of the trailer 128 of the transport vehicle 104 during the unloading operation. For example, during the unloading operation, the cart management system 202 may be provide the estimation of the fill level of the trailer 128 of the transport vehicle 104 to a remote device 508. In some embodiments, the cart management system 202 may cause a visual representation of the fill level of the trailer 128 of the transport vehicle 104 to be depicted on a display of the remote device 508.

In some embodiments, the method 600 may optionally include causing the unloading system 118 of the cart 102 to unload the commodity 702 from the hopper 114 of the cart 102 to the trailer 128 of the transport vehicles 104 prior to act 606 of FIG. 6. In particular, the cart management system 202 may active the auger 122 or a conveyor of the cart 102, which may transfer the commodity 702 from the hopper 114 of the cart 102 to the trailer 128 of the transport vehicle 104. The commodity 702 may flow through the auger 122, which may be positioned over an opening of the trailer 128. The flow rate of the commodity may be monitored by the cart management system 202, and the cart management systems 202 may adjust a position of the auger 122 to ensure even distribution of the commodity within the trailer 128, preventing overloading or spillage. Throughout the unloading operation, a level of the commodity in both the hopper 114 of the cart 102 and the trailer of the transport vehicle 104 may be monitored according to the manners described above, and the cart management system 202 may make adjustments as determined requisite to maintain a steady and efficient transfer. Once the hopper of the cart 102 is emptied, the cart management system 202 may shut off the auger 122. The transport vehicle 104 and trailer 128 may be transported to a next destination.

FIG. 9 is a schematic view of the control system 206 (e.g., computing device) that may implement the cart management system 202, which may operate one or more functions of the agricultural vehicle 108 and/or the cart 102 according to some embodiments of the disclosure. For ease of description, FIG. 9 is described herein with reference to the control system 206; however, the disclosure is not so limited, and the description of FIG. 9 is equally applicable to the cart management system 202 itself.

The control system 206 may include a communication interface 902, a processor 904, a memory 906, a storage device 908, and a bus 910 in addition to the input/output device 912.

In some embodiments, the processor 904 includes hardware for executing instructions, such as those making up a computer program. As an example, and not by way of limitation, to execute instructions, the processor 904 may retrieve (or fetch) the instructions from an internal register, an internal cache, the memory 906, or the storage device 908 and decode and execute them. In some embodiments, the processor 904 may include one or more internal caches for data, instructions, or addresses. As an example, and not by way of limitation, the processor 904 may include one or more instruction caches, one or more data caches, and one or more translation look aside buffers (TLBs). Instructions in the instruction caches may be copies of instructions in the memory 906 or the storage device 908.

The memory 906 may be coupled to the processor 904. The memory 906 may be used for storing data, metadata, and programs for execution by the processor(s). The memory 906 may include one or more of volatile and non-volatile memories, such as Random-Access Memory ("RAM"), Read-Only Memory ("ROM"), a solid state disk, Flash, Phase Change Memory ("PCM"), or other types of data storage. The memory 906 may be internal or distributed memory.

The storage device 908 may include storage for storing data or instructions. As an example, and not by way of limitation, storage device 908 can comprise a non-transitory storage medium described above. The storage device 908 may include a hard disk drive (HDD), a floppy disk drive, Flash memory, an optical disc, a magneto-optical disc, magnetic tape, or a Universal Serial Bus (USB) drive or a combination of two or more of these. The storage device 908 may include removable or non-removable (or fixed) media, where appropriate. The storage device 908 may be internal or external to the computing storage device 908. In one or more embodiments, the storage device 908 is non-volatile, solid-state memory. In other embodiments, the storage device 908 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The communication interface 902 can include hardware, software, or both. The communication interface 902 may provide one or more interfaces for communication (such as, for example, packet-based communication) between the control system 206 and one or more other computing devices or networks (e.g., a server, etc.). As an example, and not by way of limitation, the communication interface 902 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 910 (e.g., a Controller Area Network (CAN) bus) may include hardware, software, or both that couples components of control system 206 to each other and to external components.

The input/output device 912 may allow an operator of the control system 206 to provide input to, receive output from, and otherwise transfer data to and receive data from control system 206. The input/output device 912 may include a mouse, a keypad or a keyboard, a joystick, a touch screen, a camera, an optical scanner, network interface, modem, other known I/O devices, or a combination of such I/O interfaces. The input/output device 912 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 912 is configured to provide graphical data to a display for presentation to an operator. The graphical data may be representative of one or more graphical user interfaces and/or any other graphical content as may serve a particular implementation. The input/output device 912 may be utilized to display data (e.g., images and/or video data) received from the one or more image sensors and provide one or more recommendations of adjusting operation of the agricultural vehicle 108 and/or the cart 102 and/or video data to assist an operator in navigating the agricultural vehicle 108 and cart 102.

All references cited herein are incorporated herein in their entireties. If there is a conflict between definitions herein and in an incorporated reference, the definition herein shall control.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. An autonomous agricultural system comprising:
an agricultural vehicle;
a cart operably coupled to the agricultural vehicle; and
a cart management system for monitoring and controlling operation of the cart and comprising:
an array of sensors mounted on at least one the agricultural vehicle or the cart;
at least one processor; and
at least one non-transitory computer-readable storage medium storing instructions thereon that, when executed by the at least one processor, cause the cart management system to:
capture, via the array of sensors and in real-time, first 3D data of at least an interior of a trailer of a transport vehicle;
based on the first 3D data, generate a three-dimensional (3D) map of the trailer in an empty state;
detect a commencement of an unloading operation by an auger of an unloading system of the cart into the trailer of the transport vehicle;
responsive to detecting the commencement of the unloading operation, capture, via the array of sensors and in real-time, second 3D data of the interior of the trailer and a commodity being unloaded into the trailer of the transport vehicle;
responsive to detecting the commencement of the unloading operation, capture, via the array of sensors and in real-time, image data of the interior of the trailer and the commodity being unloaded into the trailer of the transport vehicle; and
based at least partially on the 3D map of the trailer, the second 3D data, and the image data, determine a fill level of the trailer of the transport vehicle.

2. The autonomous agricultural system of claim 1, wherein the cart management system further comprises instructions thereon that, when executed by the at least one processor, cause the cart management system to analyze the image data to identify and classify at least the trailer, the auger, and the commodity within the image data.

3. The autonomous agricultural system of claim 2, wherein analyzing the image data to identify and classify at least the trailer, the auger, and the commodity within the image data comprises analyzing the image data via one or more machine learning algorithms.

4. The autonomous agricultural system of claim 3, wherein analyzing the image data to identify and classify at least the trailer, the auger, and the commodity within the image data comprises utilizing a single shot detector algorithm to identify the trailer, the auger, and the commodity.

5. The autonomous agricultural system of any one of claims 1-4, wherein detecting the commencement of the unloading operation comprises detecting the commodity leaving a downspout of the auger.

6. The autonomous agricultural system of any one of claims 1-5, wherein the cart management system further comprises instructions thereon that, when executed by the at least one processor, cause the cart management system to:
fuse the second 3D data and the image data to generate enhanced fused data; and
determine the fill level of the trailer of the transport vehicle based at least partially on the enhanced fused data.

7. The autonomous agricultural system of any one of claims 1-6, wherein the cart management system further comprises instructions thereon that, when executed by the at least one processor, cause the cart management system to: responsive to determining that the fill level is at or proximate a maximum fill level of a compartment of the trailer, cause the autonomous agricultural system to move relative to the transport vehicle or terminate the unloading operation.

8. The autonomous agricultural system of claim 7, wherein causing the autonomous agricultural system to move relative to the transport vehicle comprises causing the autonomous agricultural system to move forward or backward such the auger is aligned with a different compartment or portion of the trailer of the transport vehicle.

9. The autonomous agricultural system of claim 7, wherein the maximum fill level of the compartment of the trailer comprises a predetermined volume percentage of an overall volume capacity of the trailer.

10. The autonomous agricultural system of any one of claims 1-9, wherein determining the fill level of the trailer of the transport vehicle comprises comparing the second 3D data with the 3D map of the trailer.

11. The autonomous agricultural system of claim 10, wherein comparing the second 3D data with the 3D map of the trailer comprises comparing a height of the commodity determined from the second 3D data and the image data to dimensions of the trailer determined via generation of the 3D map of the trailer in an empty state.

12. The autonomous agricultural system of any one of claims 1-11, wherein the cart management system further comprises instructions thereon that, when executed by the at least one processor, cause the cart management system to: provide an indication of the determined fill level of the trailer of the transport vehicle during the unloading operation.

13. The autonomous agricultural system of claim 12, wherein providing the indication of the determined fill level of the trailer of the transport vehicle during the unloading operation comprises causing a visual depiction of the fill level to be displayed on remote device.

14. The autonomous agricultural system of any one of claims 1-13, wherein the first 3D data comprises first LIDAR data, and wherein the second 3D data comprises second LIDAR data.

15. A method of monitoring and controlling operation of a cart of an autonomous agricultural system, the cart being operably coupled to an agricultural vehicle of the autonomous agricultural system, the method comprising:
capturing, via an array of sensors mounted on one or more of the cart or the agricultural vehicle and in real-time, first 3D data of an interior of a trailer of a transport vehicle;
based on the first 3D data, generating a three-dimensional (3D) map of the trailer in an empty state;
detecting a commencement of an unloading operation by an auger of an unloading system of the cart into the trailer of the transport vehicle;
responsive to detecting the commencement of the unloading operation, capturing, via the array of sensors and in real-time, second 3D data of the interior of the trailer and a commodity being unloaded into the trailer of the transport vehicle;
responsive to detecting the commencement of the unloading operation, capturing, via the array of sensors and in real-time, image data of the interior of the trailer and a commodity being unloaded into the trailer of the transport vehicle; and
based at least partially on the 3D map of the trailer, the second 3D data, and the image data, determining a fill level of the trailer of the transport vehicle.
